# EUROPÄISCHE PATENTANMELDUNG

(11) **EP 2 733 035 A2**
(43) Veröffentlichungstag der Anmeldung: **21.05.2014**
(21) Anmeldenummer: 13185684.1
(22) Anmeldetag: 24.09.2013
(51) Int. Cl.: B60W 20/00, B60T 1/10, B60T 7/04, B60T 8/32, B60T 8/40, B60W 10/08, B60W 10/184, B60W 10/188, B60W 30/18

(54) **Steuervorrichtung für zumindest eine Bremssystemkomponente eines rekuperativen Bremssystems, Steuervorrichtung für eine Informationsausgabeeinrichtung eines Fahrzeugs und Verfahren zum Betreiben mindestens eines rekuperativen Bremssystems eines Fahrzeugs**

(30) Priorität: 14.11.2012 DE 102012220770
(71) Anmelder: ROBERT BOSCH GMBH, 70442 Stuttgart (DE)
(72) Erfinder: Knoll, Stefan, 74321 Bietigheim-Bissingen (DE); Wack, Roman, 66453 Peppenkum (DE)

(57) **Zusammenfassung**

Die Erfindung betrifft eine Steuervorrichtung (10) für zumindest eine Bremssystemkomponente (18) eines rekuperativen Bremssystems mit einer Elektronikeinrichtung (12), welche dazu ausgelegt ist, eine erste Information (14) bezüglich eines aktuell maximal ausübbaren Motor-Bremsmoments (Bm) mindestens eines generatorisch betreibbaren Elektromotors und eine zweite Information (16) bezüglich angeforderten Soll-Bremsmoments (Bsoll) zu empfangen oder zu ermitteln, und die Bremssystemkomponente (18), mittels welcher eine der Betätigung des Bremspedals entgegenwirkende Gegenkraft (Fg) ausübbar ist, anzusteuern, wobei die Elektronikeinrichtung (12) zusätzlich dazu ausgelegt ist, unter Berücksichtigung der ersten Information (14) und der zweiten Information (16) die Bremssystemkomponente (18) so anzusteuern, dass eine haptische Rückmeldung an den das Bremspedal betätigenden Fahrer aufgrund einer Kraftstufe der von der angesteuerten Bremssystemkomponente (18) ausgeübten Gegenkraft (Fg) bei einem Überschreiten des aktuell maximal ausübbaren Motor-Bremsmoments (Bm) durch das Soll-Bremsmoment (Bsoll) ausgebbar ist. Die Erfindung betrifft auch eine weitere Steuervorrichtung und ein Verfahren zum Betreiben mindestens eines rekuperativen Bremssystems eines Fahrzeugs.

## Beschreibung

Die Erfindung betrifft eine Steuervorrichtung für zumindest eine Bremssystemkomponente eines rekuperativen Bremssystems eines Fahrzeugs und eine Steuervorrichtung für eine Informationsausgabeeinrichtung eines Fahrzeugs. Ebenso betrifft die Erfindung ein Bremspedal, ein Steuergerät für ein rekuperatives Bremssystem eines Fahrzeugs und ein rekuperatives Bremssystem eines Fahrzeugs. Des Weiteren betrifft die Erfindung ein Verfahren zum Betreiben mindestens eines rekuperativen Bremssystems eines Fahrzeugs.

### Stand der Technik

In der US 2004/0251095 A1 ist ein elektronisches Fahrzeugbremssystem beschrieben. Das Fahrzeugbremssystem ist dazu ausgelegt, bei einem von dem Fahrer eines damit ausgestatteten Fahrzeugs mittels einer Betätigung des Bremspedals angeforderten Soll-Bremsmoment unter einem aktuell maximal ausübbaren Motor-Bremsmoment mindestens eines generatorisch betreibbaren Elektromotors des Fahrzeugbremssystems lediglich den mindestens einen Elektromotor zum Abbremsen des Fahrzeugs einzusetzen, während gleichzeitig mittel eines Pedalsimulators eine der Betätigung des Bremspedals entgegen wirkende Gegenkraft ausgeübt wird. Sofern das vom Fahrer angeforderte Soll-Bremsmoment das aktuell maximal ausübbare Motor-Bremsmoment übersteigt, wird eine Hydraulik zum Abbremsen des Fahrzeugs eingesetzt. Während des Betriebs der Hydraulik wird die mittels des Pedalsimulators ausgeübte Gegenkraft reduziert.

### Offenbarung der Erfindung

Die Erfindung schafft eine Steuervorrichtung für mindestens eine Bremssystemkomponente eines rekuperativen Bremssystems eines Fahrzugs mit den Merkmalen des Anspruchs 1, ein Bremspedal mit einer Steuervorrichtung mit den Merkmalen des Anspruchs 6, eine Steuervorrichtung für eine Informationsausgabeeinrichtung eines Fahrzeugs mit den Merkmalen des Anspruchs 7, ein Steuergerät für ein rekuperatives Bremssystem eines Fahrzeugs mit den Merkmalen des Anspruchs 8, ein rekuperatives Bremssystem eines Fahrzeugs mit den Merkmalen des Anspruchs 9 und ein Verfahren zum Betreiben mindestens eines rekuperativen Bremssystems eines Fahrzeugs mit den Merkmalen des Anspruchs 10.

### Vorteile der Erfindung

Die vorliegende Erfindung ermöglicht eine haptische Rückmeldung an den Fuß des Fahrers in Form einer Kraftstufe, eine optische Rückmeldung durch ein an den Fahrer ausgegebenes optisches Signal und/oder eine akustische Rückmeldung durch ein an den Fahrer ausgegebenes akustisches Signal bei einem von dem Fahrer vorgegebenen Soll-Bremsmoment, welches das mittels des mindestens einen generatorisch betreibbaren Elektromotors aktuell maximal ausübbare Motor-Bremsmoment übersteigt. Somit kann dem Fahrer deutlich gemacht werden, bis wann das von ihm vorgegebene Soll-Bremsmoment rein elektrisch/generatorisch ausübbar ist, und ab wann zusätzlich zu dem mindestens einen generatorisch betreibbaren Elektromotor noch mindestens eine weitere Reibbremse zum Erfüllen des Fahrerbremswunsches notwendig ist.

Die vorliegende Erfindung gibt dem Fahrer damit mindestens eine Möglichkeit zu erfahren, wie die von ihm angeforderte Verzögerung seines Fahrzeugs ausgeführt wird. Anhand der bemerkten haptischen, optischen und/oder akustischen Rückmeldung kann der Fahrer erkennen, ob der Fahrerbremswunsch rein elektrisch/generatorisch oder als Bremskombination aus einer elektrischen/generatorischen Bremsung und einer mechanischen (nicht-generatorischen) Bremsung ausgeführt wird. Die vorliegende Erfindung erleichtert dem Fahrer das Begrenzen des Verzögerungswunsches auf ein rein elektrisch/generatorisch ausführbares Bremsen.

Außerdem erzieht die vorliegende Erfindung den Fahrer zu einem Bremsverhalten, durch welches ein möglichst großer Anteil der kinetischen Energie des Fahrzeugs in elektrische Energie umwandelbar ist. Die vorliegende Erfindung gewährleistet somit eine Steigerung der beim Abbremsen des Fahrzeugs gewonnenen elektrischen Energie. Auf diese Weise kann sichergestellt werden, dass ein möglichst geringer Anteil der kinetischen Energie des Fahrzeugs bei einem Abbremsen verloren geht. Insbesondere kann die vorliegende Erfindung den Fahrer dazu erziehen, dass er lediglich in Notbremssituationen so stark abbremst, dass die von ihm angeforderte Bremsung nicht zu einem signifikanten Teil mittels des mindestens einen generatorisch betreibbaren Elektromotors ausführbar ist.

Mittels der vorliegenden Erfindung ist auch die herkömmliche Auslegungsproblematik hinsichtlich einer Bremsverblendung (eines Break Blending) umgehbar.

Vorzugsweise ist das mit der Erfindung zusammenwirkende rekuperative Bremssystem so ausgelegt (d.h. mittels der Steuervorrichtung oder einer anderen Steuerelektronik so ansteuerbar), dass bei einem Soll-Bremsmoment kleiner gleich dem maximal ausübbaren Motor-Bremsmoment rein elektrisch/rekuperativ mittels des mindestens einen generatorisch betreibbaren Elektromotors abgebremst wird. Erst ab einem Soll-Bremsmoment über dem maximal ausübbaren Motor-Bremsmoment wird (ergänzend) mindestens eine weitere Reibbremse, wie beispielsweise mindestens ein Radbremszylinder, zum Abbremsen des Fahrzeugs aktiv eingesetzt. Somit kann sichergestellt werden, dass ein möglichst großer Anteil des Fahrerbremswunsches zum Aufladen mindestens einer Batterie genutzt wird.

In einer vorteilhaften Ausführungsform ist die Bremssystemkomponente mittels der Elektronikeinrichtung unter Berücksichtigung der ersten Information und der zweiten Information so ansteuerbar, dass die Gegenkraft für Soll-Bremsmomente kleiner als dem aktuell maximal ausübbaren Motor-Bremsmoment eine mittlere Steigung und/oder eine maximale Steigung aufweist, welche zumindest um einen Faktor 2 kleiner als eine Grenz-Steigung der Gegenkraft bei dem Überschreiten des maximal ausübbaren Motor-Bremsmoments durch das Soll-Bremsmoment ist. Insbesondere können die mittlere Steigung und/oder die maximale Steigung um einen Faktor von mindestens 3, vorzugsweise um einen Faktor von mindestens 5, kleiner als die Grenz-Steigung der Gegenkraft bei dem Überschreiten des aktuell maximal ausübbaren Motor-Bremsmoments durch das Soll-Bremsmoment sein. In allen Fällen ist gewährleistet, dass der Fahrer durch die auf diese Weise realisierte Kraftstufe eine wahrnehmbare haptische Rückmeldung erhält.

Ebenso kann die Bremssystemkomponente mittels der Elektronikeinrichtung unter Berücksichtigung der ersten Information und der zweiten Information so ansteuerbar sein, dass die Gegenkraft für Soll-Bremsmomente kleiner als dem aktuell maximal ausübbaren Motor-Bremsmoment kleiner als 30N ist, und bei dem Überschreiten des aktuell maximal ausübbaren Motor-Bremsmoments durch das Soll-Bremsmoment um mindestens 10N zunimmt. Die Gegenkraft für Soll-Bremsmomente kleiner als dem aktuell maximal ausübbaren Motor-Bremsmoment kann insbesondere kleiner als 25N, vorzugsweise kleiner als 20N, bevorzugter Weise kleiner als 15N, sein. Außerdem kann die Gegenkraft bei dem Überschreiten des aktuell maximal ausübbaren Motor-Bremsmoments durch das Soll-Bremsmoment um mindestens 15N, bevorzugter Weise um mindestens 20N zunehmen. In allen der hier beschriebenen Ausführungsformen erhält der Fahrer eine wahrnehmbare Rückantwort des Bremspedals bei dem Überschreiten des aktuell maximal ausübbaren Motor-Bremsmoments durch das Soll-Bremsmoment.

In einer vorteilhaften Weiterbildung ist die Elektronikeinrichtung nach dem Überschreiten des aktuell maximal ausübbaren Motor-Bremsmoments durch das Soll-Bremsmoment zusätzlich dazu ausgelegt ist, sofern das aktuell maximal ausübbare Motor-Bremsmoment abnimmt, die Bremssystemkomponente und/oder einen dem Bremspedal zugeordneten Motor so anzusteuern, dass das Bremspedal mittels der Bremssystemkomponente und/oder des Motors in eine dem aktuell maximal ausübbaren Motor-Bremsmoment entsprechende Stellung zurückverstellbar ist. Durch die Rückmeldung des Bremspedals an den Fahrer bezüglich der abnehmenden rein-elektrisch erbringbaren Bremsleistung kann der Fahrer sein Bremsverhalten an die Abnahme des aktuell maximal ausübbaren Bremsmoments anpassen. Insbesondere durch ein Verschieben des Bremspedals hin zum Fahrer wird diesem verständlich klar gemacht, dass eine Reduzierung des Soll-Bremsmoments für einen energiesparenden und emissionsarmen Betrieb des Fahrzeugs vorteilhaft ist.

Beispielsweise können mittels der Elektronikeinrichtung ein mechanischer Pedalsimulator, eine hydraulische Pedal-Simulatoreinrichtung, eine Pedal-Einrichtung und/oder ein Ventil des rekuperativen Bremssystems als die Bremssystemkomponente ansteuerbar sein. Somit kann die Steuervorrichtung mit einer Vielzahl von Bremssystemkomponenten vorteilhaft zusammen wirken.

Die oben aufgezählten Vorteile sind auch bei einem Bremspedal mit einer derartigen Steuervorrichtung gewährleistet.

Auch die Steuervorrichtung für eine Informationsausgabeeinrichtung gewährleistet die oben beschriebenen Vorteile. Die im Weiteren beschriebenen verschiedenen Steuervorrichtungen können auch zu einer einzigen Steuervorrichtung kombiniert werden, mittels welcher sowohl eine Bremssystemkomponente als auch eine Informationsausgabeeinrichtung ansteuerbar sind.

Die Vorteile der vorliegenden Erfindung ergeben sich auch bei einem Steuergerät für ein rekuperatives Bremssystem eines Fahrzeugs oder bei einem rekuperativen Bremssystem eines Fahrzeugs, welche mit einer Ausführungsform der Steuervorrichtung ausgestattet sind. Es wird ausdrücklich darauf hingewiesen, dass das Steuergerät und das rekuperative Bremssystem den verschiedenen Ausführungsformen der im Weiteren beschriebenen Steuervorrichtungen ausstattbar sind.

Des Weiteren sind die Vorteile realisierbar durch das Ausführen eines korrespondierenden Verfahrens zum Betreiben mindestens eines rekuperativen Bremssystems eines Fahrzeugs. Das Verfahren ist entsprechend der oben und im Weiteren beschriebenen Ausführungsformen der Steuervorrichtung weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: eine schematische Darstellung einer ersten Ausführungsform der Steuervorrichtung und ein Koordinatensystem zum Erläutern von deren Funktionsweise;
- Fig. 2: eine schematische Darstellung einer zweiten Ausführungsform der Steuervorrichtung; und
- Fig. 3: ein Flussdiagramm zum Darstellen einer Ausführungsform des Verfahrens zum Betreiben mindestens eines rekuperativen Bremssystems eines Fahrzeugs.

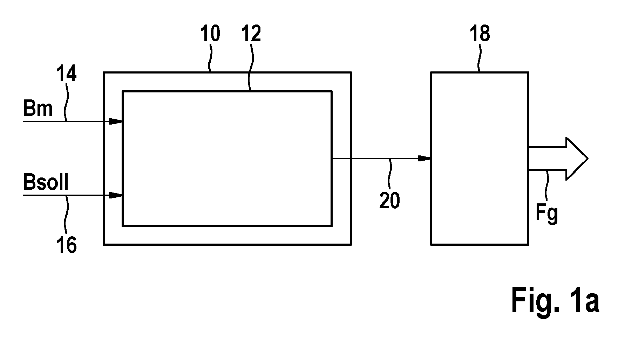

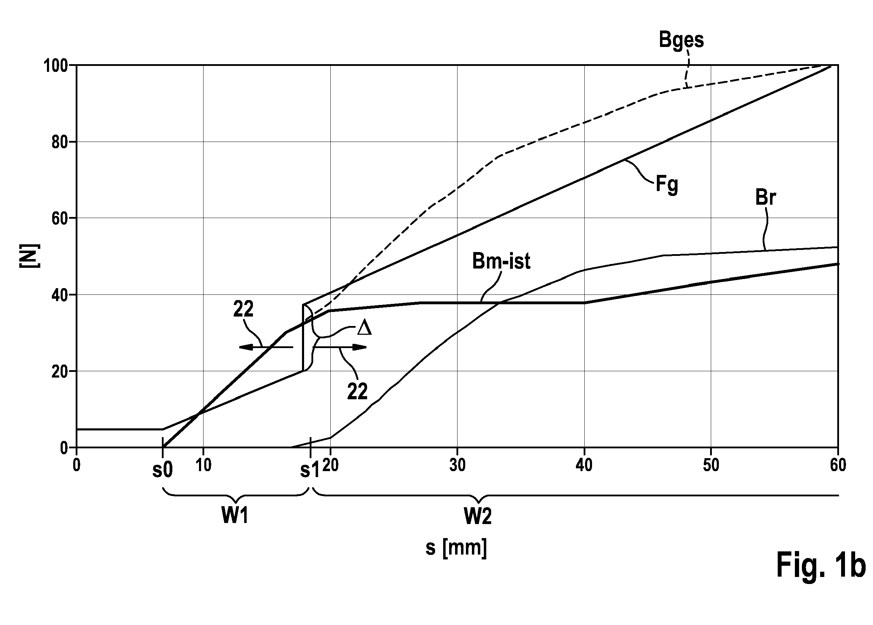

### Ausführungsformen der Erfindung Fig. 1a und 1 b zeigen eine schematische Darstellung einer ersten Ausführungsform der Steuervorrichtung und ein Koordinatensystem zum Erläutern von deren Funktionsweise.

Die in Fig. 1a schematisch dargestellte Steuervorrichtung 10 weist eine Elektronikeinrichtung 12 auf, mittels welcher eine erste Information 14 bezüglich eines aktuell maximal ausübbaren Motor-Bremsmoments Bm mindestens eines (nicht skizzierten) generatorisch betreibbaren Elektromotors eines mit der Steuervorrichtung 10 zusammenwirkenden rekuperativen Bremssystems empfangbar oder ermittelbar ist. Außerdem ist die Elektronikeinrichtung 12 dazu ausgelegt, eine zweite Information 16 bezüglich eines von einem Fahrer eines mit der Steuervorrichtung 10 ausgestatteten Fahrzeugs durch eine Betätigung eines (nicht dargestellten) Bremspedals angeforderten Soll-Bremsmoments Bsoll zu empfangen oder zu ermitteln.

Als erste Information 14 können beispielsweise eine aktuelle Geschwindigkeit des Fahrzeugs und/oder ein Ladezustand einer mittels des mindestens einen Elektromotors aufladbaren Batterie abfragbar, ermittelbar und/oder empfangbar sein. Die Elektronikeinrichtung kann beispielsweise als zweite Information 16 einen Pedalweg (Verstellweg des Bremspedals aus einer kraftlosen Ausgangsstellung), einen Bremsdruck und/oder eine Fahrerbremskraft ermitteln, abfragen und/oder empfangen. Da die zum Ermitteln/Festlegen derartiger Informationen 14 und 16 einsetzbaren Sensortypen bekannt sind, wird hier nicht weiter darauf eingegangen. Ebenso können die Informationen 14 und 16 zumindest teilweise von einer zentralen Fahrzeugsteuerautomatik, insbesondere über einen Fahrzeugbus, abfragbar sein. Es wird ausdrücklich darauf hingewiesen, dass die abfragbaren, ermittelbaren und/oder empfangbaren Informationen 14 und 16 nicht auf die hier aufgezählten Beispiele limitiert sind.

Die Elektronikeinrichtung 12 ist dazu ausgelegt, unter Berücksichtigung der ersten Information 14 und der zweiten Information 16 zumindest eine schematisch wiedergegebene Bremssystemkomponente 18 des rekuperativen Bremssystems des Fahrzeugs mittels mindestens eines Steuersignals 20 anzusteuern. Unter der Bremssystemkomponente 18 ist eine Komponente des Bremssystems zu verstehen, mittels welcher eine der Betätigung des Bremspedals entgegenwirkende Gegenkraft Fg ausübbar ist, wobei die Gegenkraft Fg in Abhängigkeit des mindestens einen Steuersignals 20 variierbar ist. Die Gegenkraft Fg ist mittels der Bremssystemkomponente 18 direkt auf das Bremspedal ausübbar oder indirekt auf das Bremspedal übertragbar. Die Elektronikeinrichtung 12 ist außerdem dazu ausgelegt, unter Berücksichtigung der ersten Information 14 und der zweiten Information 16 die Bremssystemkomponente 18 so anzusteuern, dass eine haptische Rückmeldung an den das Bremspedal betätigenden Fahrer aufgrund einer Kraftstufe der von der angesteuerten Bremssystemkomponente 18 ausgeübten Gegenkraft Fg bei einem Überschreiten des aktuell maximal ausübbaren Motor-Bremsmoments Bm durch das Soll-Bremsmoment Bsoll ausgebbar ist.

Durch die mittels der Kraftstufe der Gegenkraft Fg an den Fahrer ausgegebene haptische Rückmeldung erhält dieser eine Information darüber, ob das von ihm angeforderte Soll-Bremsmoment noch rein elektrisch/generativ bewirkbar ist, oder ob mindestens eine weitere Reibbremse zusätzlich zu dem mindestens einen Elektromotor zum Abbremsen des Fahrzeugs einzusetzen ist. Die haptische Rückmeldung/die Kraftstufe der Gegenkraft Fg unterstützt den Fahrer erheblich dabei, das Soll-Bremsmoment Bsoll innerhalb des aktuell maximal ausübbaren Motor-Bremsmoments Bm zu halten. Somit kann der Fahrer mittels der Steuervorrichtung 10 zu einem Bremsverhalten angehalten werden, bei welchem ein vergleichsweise großer Teil kinetischer Energie beim Abbremsen des Fahrzeugs in elektrische Energie umwandelbar ist. Auf diese Weise ist gewährleistbar, dass nur ein vergleichsweise geringer Teil an kinetischer Energie durch eine Reibbremsung (unerwünschter Weise) in Wärme umgewandelt wird. Die Steuervorrichtung 10 kann somit dazu beitragen, einen Energieverbrauch und/oder eine Schadstoffemission eines damit ausgestatteten Fahrzeugs zu verringern.

Bevorzugterweise ist das mit der Steuervorrichtung 10 zusammenwirkende rekuperative Bremssystem so ausgelegt (d.h. mittels der Steuervorrichtung 10 oder einer anderen Steuerelektronik so ansteuerbar), dass, sofern das angeforderte Soll-Bremsmoment Bsoll kleiner-gleich dem aktuell maximal ausübbaren Motor-Bremsmoment Bm ist, das Fahrzeug rein elektrisch/generatorisch gebremst wird. In diesem Fall wird erst bei einem Soll-Bremsmoment Bsoll größer als dem aktuell maximal ausübbaren Motor-Bremsmoment Bm (ergänzend) mittels mindestens einer weiteren Reibbremse, wie beispielsweise mindestens einem Radbremszylinder, gebremst. Der Fahrer spürt somit mittels der Kraftstufe der Gegenkraft Fg den Übergang von einem rein elektrisch/generatorisch erzeugtem Bremsen und einer einsetzender Reibbremsung. Er kann sein Bremsverhalten deshalb so anpassen, dass dieser Übergang nur bei Notbremssituationen auftritt.

Mittels des mindestens einen Steuersignals 20 der Elektronikeinrichtung 12 können ein mechanischer Pedalsimulator, eine hydraulische Pedal-Simulatoreinrichtung, eine Pedal-Einrichtung und/oder ein Ventil des rekuperativen Bremssystems als die Bremssystemkomponente 18 ansteuerbar sein. Beispielsweise kann mittels eines mechanischen Pedalsimulators die Gegenkraft Fg als zusätzliche Reibung auf das Bremspedal aufgebracht werden. Entsprechend kann auch eine hydraulische Pedal-Simulatoreinrichtung, beispielsweise ein Plunger/eine Speicherkammer und/oder eine anders ausgebildete Hydraulikkomponente dazu eingesetzt werden, mittels einer Lenkung der in dem Hauptbremszylinder dem Verstellen des Bremspedals entgegenwirkenden Hydraulikflüssigkeit die Gegenkraft Fg entsprechend zu variieren. Mittels einer Pedal-Einrichtung kann außerdem ein Leerweg/Totweg so variiert werden, dass der Leerweg/Totweg erst bei einem Soll-Bremsmoment Bsoll gleich dem aktuell maximal ausübbaren Motor-Bremsmoment überwunden wird. Des Weiteren kann auch mindestens ein Ventil des rekuperativen Bremssystems so geöffnet/geschlossen werden, dass ein gewünschter Kraftverlauf der Gegenkraft Fg gewährleistet ist, indem lediglich eine dem gewünschten Kraftverlauf der Gegenkraft Fg entsprechende Flüssigkeitsmenge aus dem Hauptbremszylinder entweichen kann. Es wird hier ausdrücklich darauf hingewiesen, dass zum Realisieren der Bremssystemkomponente 18 häufig auf bereits vorhandende Komponenten des rekuperativen Bremssystems zurückgegriffen werden kann. Das Zusammenwirken der Steuervorrichtung 10 mit dem rekuperativen Bremssystem erfordert somit keine zusätzliche Mechanik/Hydraulik für die Bremssystemkomponente 18.

In einer vorteilhaften Ausführungsform kann die Bremssystemkomponente 18 mittels des mindestens einen Steuersignals 20 der Elektronikeinrichtung 12 unter Berücksichtigung der ersten Information 14 und der zweiten Information so ansteuerbar sein, dass die Gegenkraft Fg für Soll-Bremsmomente Bsoll kleiner als dem aktuell maximal ausübbaren Motor-Bremsmoment Bm eine mittlere Steigung und/oder eine maximale Steigung aufweist, welche zumindest um einen Faktor 2, vorzugsweise um zumindest einen Faktor 3, bevorzugter Weise um zumindest einen Faktor 5, kleiner als eine Grenz-Steigung der Gegenkraft Fg bei dem Überschreiten des aktuell maximal ausübbaren Motor-Bremsmoments Bm durch das Soll-Bremsmoment Bsoll ist. Ebenso kann die Bremssystemkomponente 18 mittels des mindestens einen Steuersignals 20 der Elektronikeinrichtung 12 unter Berücksichtigung der ersten Information 14 und der zweiten Information 16 so ansteuerbar sein, dass die Gegenkraft Fg für Soll-Bremsmomente Bsoll kleiner als dem aktuell maximal ausübbaren Motor-Bremsmoment Bm kleiner als 30N (Newton), vorzugsweise kleiner als 25N, insbesondere kleiner als 20N, bevorzugter Weise kleiner als 15N, ist. In diesen Fällen nimmt die Gegenkraft Fg bei dem Überschreiten des aktuell maximal ausübbaren Motor-Bremsmoments Bm durch das Soll-Bremsmoment Bsoll vorteilhafterweise um mindestens 10N, vorzugsweise um mindestens 15N, bevorzugter Weise um mindestens 20N, zu. In allen der hier aufgezählten Fälle ist eine für den Fahrer verlässlich wahrnehmbare haptische Rückwirkung durch die Kraftstufe der Gegenkraft Fg gewährleistet.

Das Koordinatensystem der Fig. 1b gibt als Abszisse einen Pedalweg s (in mm) als die erste Information 14 bezüglich des von dem Fahrer zur Verzögerung seines Fahrzeugs angeforderten Soll-Bremsmoments Bsoll wieder. Mittels der Ordinate des Koordinatensystems der Fig. 1b sind das mittels des mindestens einen Generators ausgeführte Motor-Bremsmoment Bm-ist, ein evtl. zusätzlich zum Abbremsen des Fahrzeugs ausgeführtes Reib-Bremsmoment Br mindestens einer Reibbremse, wie beispielsweise eines Radbremszylinders, und ein Gesamt-Bremsmoment Bges als Summe aus dem ausgeführten Motor-Bremsmoment Bm-ist und dem Reib-Bremsmoment Br angegeben. Vorzugsweise entspricht das Gesamt-Bremsmoment Bges dem Soll-Bremsmoment Bsoll (welches in Fig. 1b nicht eingezeichnet ist). Außerdem ist mittels der Koordinate des Koordinatensystems der Fig. 1b auch die Gegenkraft Fg (in N) dargestellt.

Wie anhand von Fig. 1b zu erkennen ist, hat der Fahrer bei einem Beginn der Pedalbetätigung, d.h. bei einem anfänglichen Verstellen des Bremspedals aus einer (kraftlosen) Ausgangsstellung, für die ersten Millimeter ein Leerweg/Totweg s0 vorgegeben. Der Fahrer spürt somit bei einem Pedalweg s kleiner als dem Leerweg/Totweg s0 (nahezu) keine Gegenkraft Fg. Der Fahrer hat damit zu Beginn der Pedalbetätigung ein gewohntes Pedalgefühl. Außerdem wird das Fahrzeug bei einem Pedalweg s keiner als dem Leerweg/Totweg s0 noch nicht verzögert werden. Das Gesamt-Bremsmoment Bges bleibt deshalb bei einem Pedalweg s keiner als dem Leerweg/Totweg s0 gleich 0.

Ab einem Pedalweg s größer als dem Totweg/Leerweg s0 wird ein Gesamt-Bremsmoment Bges größer 0 aufgebaut, welches vorzugsweise dem Pedalweg s und/oder dem von dem Fahrer mittels der Pedalbetätigung angeforderten Soll-Bremsmoments Bsoll entspricht. Bevorzugter Weise wird das Gesamt-Bremsmoment Bges, solange dies möglich ist, rein elektrisch/generatorisch von dem mindestens einen Elektromotor des Fahrzeugs bewirkt. Die Elektronikeinrichtung 12 teilt dies dem Fahrer mit, indem bis zum Überschreiten des aktuell maximal ausübbaren Motor-Bremsmoments Bm durch das Soll-Bremsmoment Bsoll die Gegenkraft Fg vergleichsweise niedrig gehalten wird. Je nach aktuell maximal ausübbaren Motor-Bremsmoment Bm, welches beispielsweise aufgrund der Fahrzeuggeschwindigkeit und/oder des Ladezustands der Batterie variieren kann, bewirkt die Elektronikeinrichtung 12 bei dem Überschreiten des aktuell maximal ausübbaren Motor-Bremsmoments Bm durch das Soll-Bremsmoment Bsoll mittels der Gegenkraft Fg eine Kraftstufe Δ an der Pedalwegposition, bei welcher das Bremspedal um einen Grenz-Pedalweg s1 verstellt ist, welcher dem aktuell maximal ausübbaren Motor-Bremsmoment Bm entspricht. Man kann dies auch so umschreiben, dass die Steuervorrichtung 10 durch die Kraftstufe Δ an der Pedalwegposition, welche der aktuell maximal rein elektrisch/generatorisch erreichbaren Bremsleistung entspricht, dem Fahrer mittels der Kraftstufe Δ eine Rückantwort gibt.

Wie mittels der Pfeile 22 wiedergegeben ist, ist der dem aktuell maximal ausübbaren Motor-Bremsmoment Bm entsprechende Grenz-Pedalweg s1 variierbar. Die Kraftstufe Δ ist derart ausgeprägt, dass für den Fahrer zwar einerseits deutlich spürbar wird, dass das Ende eines rein elektrischen/generatorischen Bremsabschnitts erreicht ist, die Überwindung der Kraftstufe Δ andererseits jedoch kein nennenswertes Hindernis zur Erreichung eines höheren Gesamt-Bremsmoments Bges darstellt.

Nachdem der Fahrer die Kraftstufe Δ erreicht hat, kann er unterschiedliche Bremssituationen wählen. Z.B. kann der Fahrer das Bremspedal weiter durchtreten, die Kraftstufe Δ überwinden und somit ein höheres Gesamt-Bremsmoment Bges (entsprechend dem Pedalweg s größer als dem Grenz-Pedalweg s1) bewirken, welches sich aus dem Motor-Bremsmoment Bm-ist und einem Reib-Bremsmoment Br ungleich 0 zusammensetzt. Der Fahrer kann jedoch auch die Pedalposition bei einem Pedalweg s kleiner/gleich dem Grenz-Pedalweg s1 halten und auf diese Weise den Bremsvorgang rein elektrisch/generatorisch (d.h. mit einem Reib-Bremsmoment Br gleich 0) ausführen. Der Fahrer kann somit wahlweise durch einen Pedalweg s in einem ersten rein elektrisch/generatorisch ausführbaren Wertebereich W1 oder durch einen Pedalweg s in einen zweiten Wertebereich W2 oberhalb der Kraftstufe Δ angeben, welchen Bremsmodus er unter Berücksichtigung der aktuellen Verkehrssituation bevorzugt.

Mit Fortschreiten der Verzögerung des Fahrzeugs, welche eine abnehmende Fahrzeuggeschwindigkeit bewirkt, sinkt auch das aktuell maximal ausübbare Bremsmoment Bm. Bevorzugterweise ist die Elektronikeinrichtung 12 deshalb nach dem Überschreiten des aktuell maximal ausübbaren Motor-Bremsmoments Bm durch das Soll-Bremsmoment Bsoll zusätzlich dazu ausgelegt, sofern das aktuell maximal ausübbare Motor-Bremsmoment Bm abnimmt, die Bremssystemkomponente 18 und/oder einen dem Bremspedal zugeordneten Motor so anzusteuern, dass das Bremspedal mittels der Bremssystemkomponente 18 und/oder des Motors in eine dem (neuen) aktuell maximal ausübbaren Motor-Bremsmoment Bm entsprechende Stellung zurück verstellbar ist. Dies kann insbesondere eine Bewegung des Bremspedals in Richtung des Fahrerfußes bewirken. Das Bremspedal wird dabei in die Position verstellt, welche der (neuen) aktuell rein elektrisch/generatorisch erreichbaren Bremsleistung entspricht.

Somit kann der Fahrer auf das Abnehmen des aktuell maximal ausübbaren Motor-Bremsmoments Bm mit einer aus zwei alternativen Verhaltensweisen reagieren. Der Fahrer kann z.B. mittels seiner Betätigung des Bremspedals dem Bremssystem ein Soll-Bremsmoment Bsoll vorgeben, welches größer als das (neue) aktuell maximal ausübbare Motor-Bremsmoment Bm ist. Dazu muß der Fahrer lediglich die Kraftstufe Δ erneut überwinden. Somit kann das Fahrzeug trotz des abnehmenden maximal ausübbaren Motor-Bremsmoments Bm mittels eines Reib-Bremsmoments Br ungleich 0 seine konstante Verzögerung beibehalten. Als Alternative dazu kann der Fahrer auch von einer Überwindung der Kraftstufe Δ absehen und das Fahrzeug rein generatorisch/elektrisch verzögern. Der Fahrer hat somit unter Berücksichtigung der aktuellen Verkehrssituation die Möglichkeit, zu entscheiden, ob er ein schnelles Abbremsen seines Fahrzeugs oder schnelles Aufladen der Fahrzeugbatterie bevorzugt. Das mittels der Steuervorrichtung 10 realisierte Bremssystem reagiert entsprechend.

In einer vorteilhaften Weiterbildung kann die Elektronikeinrichtung 12 auch auf ein zunehmendes aktuell maximal ausübbares Motor-Bremsmoment Bm reagieren, indem das Bremspedal vom Fahrer weg verschoben wird.

Die oben beschriebenen Vorteile sind auch bei einem entsprechenden Bremspedal mit der Steuervorrichtung 10 gewährleistet.

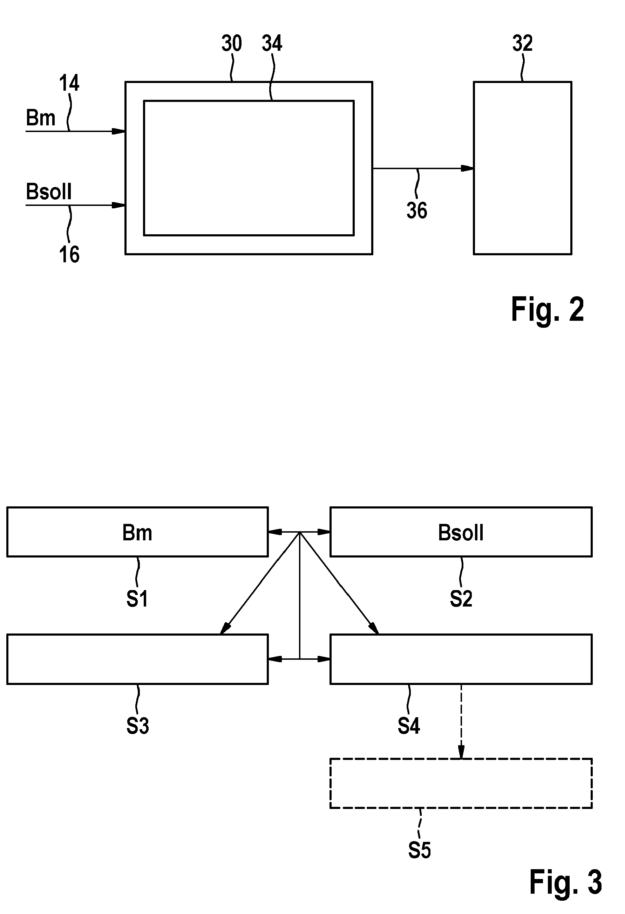

Fig. 2 zeigt eine schematische Darstellung einer zweiten Ausführungsform der Steuervorrichtung.

Die in Fig. 2 schematisch dargestellte Steuervorrichtung 30 ist zum Ansteuern einer Informationsausgabeeinrichtung eines Fahrzeugs, beispielsweise einer Leuchteinrichtung, einer Bildanzeige und/oder einer Tonausgabeeinrichtung, ausgelegt. Die Steuervorrichtung 30 weist eine Auswerteeinrichtung 34 auf, welche dazu ausgelegt ist, die erste Information 14 (bezüglich des aktuell maximal ausübbaren Motor-Bremsmoments Bm mindestens eines generatorisch betreibbaren Elektromotors eines rekuperativen Bremssystems des Fahrzeugs) zu empfangen oder zu ermitteln. Außerdem ist die Auswerteeinrichtung 34 auch dazu ausgelegt, die zweite Information 16 (bezüglich des von dem Fahrer des Fahrzeugs durch die Betätigung des Bremspedals angeforderten Soll-Bremsmoments Bsoll) zu empfangen oder zu ermitteln. Unter Berücksichtigung der ersten Information 14 und der zweiten Information 16 steuert die Auswerteeinrichtung 34 die Informationsausgabeeinrichtung 32 bei einem Überschreiten des aktuell maximal ausübbaren Motor-Bremsmoments Bm durch das Soll-Bremsmoment Bsoll so an, dass mittels der angesteuerten Informationsausgabeeinrichtung 32 ein optisches Signal und/oder ein akustisches Signal an den Fahrer des Fahrzeugs ausgebbar ist. Dazu gibt die Auswerteeinrichtung 34 mindestens ein Steuersignal 36 an die Informationsausgabeeinrichtung 32 aus.

Auch die Steuervorrichtung 10 erleichtert dem Fahrer das Anpassen seines Bremsverhaltens an eine besonders energiesparende Vorgehensweise. Gleichzeitig kann der Fahrer bei jedem Abbremsen seines Fahrzeugs sich trotzdem für eine schnelle Bremsung entscheiden, sofern ihm dies aufgrund der aktuellen Verkehrssituation als vorteilhafter gegenüber einem rein elektrischen/generatorischen Bremsen scheint.

Die oben ausgeführten Steuervorrichtungen 10 und 30 können auch zu einer Steuervorrichtung kombiniert werden, mittels welcher sowohl eine Bremssystemkomponente 18 als auch eine Informationsausgabeeinrichtung 32 ansteuerbar sind.

Die Vorteile der oben ausgeführten Steuervorrichtungen 10 und 30 sind auch gewährleistet bei einem Steuergerät für ein rekuperatives Bremssystem eines Fahrzeugs mit einer derartigen Steuervorrichtung 10 oder 30. Des Weiteren sind die Vorteile realisierbar durch das Ausstatten eines rekuperativen Bremssystems eines Fahrzeugs mit einer derartigen Steuervorrichtung 10 oder 30 oder mit dem Steuergerät mit der Steuervorrichtung 10 oder 30.

Fig. 3 zeigt ein Flussdiagramm zum Darstellen einer Ausführungsform des Verfahrens zum Betreiben mindestens eines rekuperativen Bremssystems eines Fahrzeugs.

Das Verfahren kann beispielsweise mit einer der oben beschriebenen Steuervorrichtungen ausgeführt werden. Die Ausführbarkeit des Verfahrens ist jedoch nicht auf das Einsetzen einer derartigen Steuervorrichtung limitiert.

Das Verfahren weist einen Verfahrensschritt S1 auf, in welchem eine erste Information bezüglich eines aktuell maximal ausübbaren Motor-Bremsmoments Bm mindestens eines generatorisch betreibbaren Elektromotors des rekuperativen Bremssystems ermittelt wird. Außerdem wird in einem Verfahrensschritt S2 des Verfahrens eine zweite Information bezüglich eines von einem Fahrer des Fahrzeugs durch eine Betätigung des Bremspedals angeforderten Soll-Bremsmoments Bsoll ermittelt. Beispiele für die erste Information und die zweite Information sind oben angegeben. Die Verfahrensschritte S1 und S2 können in beliebiger Reihenfolge oder gleichzeitig ausgeführt werden.

Das Verfahren weist zusätzlich zu den Verfahrensschritten S1 und S2 noch mindestens einen der Verfahrensschritte S3 und S4 auf. Optionaler Weise können auch beide Verfahrensschritte S3 und S4 ausgeführt werden.

Der Verfahrensschritt S3 umfasst ein Ansteuern einer Informationsausgabeeinrichtung des Fahrzeugs unter Berücksichtigung der ersten Information und der zweiten Information so, dass bei einem Überschreiten des aktuell maximal ausübbaren Motor-Bremsmoments Bm durch das Soll-Bremsmoment Bsoll mittels der angesteuerten Informationsausgabeeinrichtung ein optisches Signal und/oder ein akustisches Signal an den Fahrer ausgegeben wird. Beispielsweise kann das Überschreiten des aktuell maximal ausübbaren Motor-Bremsmoments Bm durch das Soll-Bremsmoment Bsoll dem Fahrer durch ein Blinken einer Leuchteinrichtung und/oder eine entsprechende Bildanzeige angezeigt werden. Ebenso kann ein Tonsignal an den Fahrer ausgegeben werden.

In dem Verfahrensschritt S4 wird eine Bremssystemkomponente des rekuperativen Bremssystems zum Ausüben einer der Betätigung des Bremspedals entgegenwirkenden Gegenkraft unter Berücksichtigung der ersten Information und der zweiten Information so angesteuert, dass eine haptische Rückmeldung an den das Bremspedal betätigenden Fahrer aufgrund einer Kraftstufe der von der angesteuerten Bremssystemkomponente ausgeübten Gegenkraft bei dem Überschreiten des aktuell maximal ausübbaren Motor-Bremsmoments Bm durch das Soll-Bremsmoment Bsoll ausgegeben wird. Beispiele für eine in dem Verfahrensschritt S4 ansteuerbare Bremssystemkomponente sind oben schon ausgeführt.

Optionaler Weise kann das Verfahren auch einen Verfahrensschritt S5 umfassen, welcher nach dem Verfahrensschritt S4 ausgeführt wird. In dem Verfahrensschritt S5 werden, sofern das aktuell maximal ausübbare Motor-Bremsmoment Bm (nach dem Überschreiten des aktuell maximal ausübbaren Motor-Bremsmoments Bm durch das Soll-Bremsmoment Bsoll) abnimmt, die Bremssystemkomponente und/oder ein dem Bremspedal zugeordneter Motor so angesteuert, dass das Bremspedal mittels der Bremssystemkomponente und/oder des Motors in eine dem (neuen) aktuell maximal ausübbaren Motor-Bremsmoment Bm entsprechende Stellung zurückgestellt wird.

Somit bewirkt auch ein Ausführen des hier beschriebenen Verfahrens eine optische, akustische und/oder haptische Rückmeldung an den Fahrer bei einem Übergang von einem rein elektrisch/generatorisch bewirkten Bremsen und einer einsetzenden hydraulisch erzeugten Reibbremsung. Damit realisiert das hier beschriebene Verfahren auch die oben beschriebenen Vorteile.

## Patentansprüche

1. Steuervorrichtung (10) für zumindest eine Bremssystemkomponente (18) eines rekuperativen Bremssystems eines Fahrzeugs mit:
einer Elektronikeinrichtung (12), welche dazu ausgelegt ist, eine erste Information (14) bezüglich eines aktuell maximal ausübbaren Motor-Bremsmoments (Bm) mindestens eines generatorisch betreibbaren Elektromotors des rekuperativen Bremssystems zu empfangen oder zu ermitteln, eine zweite Information (16) bezüglich eines von einem Fahrer des Fahrzeugs durch eine Betätigung eines Bremspedals angeforderten Soll-Bremsmoments (Bsoll) zu empfangen oder zu ermitteln, und unter Berücksichtigung der ersten Information (14) und der zweiten Information (16) die Bremssystemkomponente (18), mittels welcher eine der Betätigung des Bremspedals entgegenwirkende Gegenkraft (Fg) ausübbar ist, so anzusteuern, dass die Gegenkraft (Fg) variierbar ist,
**dadurch gekennzeichnet, dass**
die Elektronikeinrichtung (12) zusätzlich dazu ausgelegt ist, unter Berücksichtigung der ersten Information (14) und der zweiten Information (16) die Bremssystemkomponente (18) so anzusteuern, dass eine haptische Rückmeldung an den das Bremspedal betätigenden Fahrer aufgrund einer Kraftstufe (Δ) der von der angesteuerten Bremssystemkomponente (18) ausgeübten Gegenkraft (Fg) bei einem Überschreiten des aktuell maximal ausübbaren Motor-Bremsmoments (Bm) durch das Soll-Bremsmoment (Bsoll) ausgebbar ist.

2. Steuervorrichtung (10) nach Anspruch 1, wobei die Bremssystemkomponente (18) mittels der Elektronikeinrichtung (12) unter Berücksichtigung der ersten Information (14) und der zweiten Information (16) so ansteuerbar ist, dass die Gegenkraft (Fg) für Soll-Bremsmomente (Bsoll) kleiner als dem aktuell maximal ausübbaren Motor-Bremsmoment (Bm) eine mittlere Steigung und/oder eine maximale Steigung aufweist, welche zumindest um einen Faktor 2 kleiner als eine Grenz-Steigung der Gegenkraft (Fg) bei dem Überschreiten des aktuell maximal ausübbaren Motor-Bremsmoments (Bm) durch das Soll-Bremsmoment (Bsoll) ist.

3. Steuervorrichtung (10) nach Anspruch 1 oder 2, wobei die Bremssystemkomponente (18) mittels der Elektronikeinrichtung (12) unter Berücksichtigung der ersten Information (14) und der zweiten Information (16) so ansteuerbar ist, dass die Gegenkraft (Fg) für Soll-Bremsmomente (Bsoll) kleiner als dem aktuell maximal ausübbaren Motor-Bremsmoment (Bm) kleiner als 30N ist, und bei dem Überschreiten des aktuell maximal ausübbaren Motor-Bremsmoments (Bm) durch das Soll-Bremsmoment (Bsoll) um mindestens 10N zunimmt.

4. Steuervorrichtung (10) nach einem der vorhergehenden Ansprüche, wobei die Elektronikeinrichtung (12) nach dem Überschreiten des aktuell maximal ausübbaren Motor-Bremsmoments (Bm) durch das Soll-Bremsmoment (Bsoll) zusätzlich dazu ausgelegt ist, sofern das aktuell maximal ausübbare Motor-Bremsmoment (Bm) abnimmt, die Bremssystemkomponente (18) und/oder einen dem Bremspedal zugeordneten Motor so anzusteuern, dass das Bremspedal mittels der Bremssystemkomponente (18) und/oder des Motors in eine dem aktuell maximal ausübbaren Motor-Bremsmoment (Bm) entsprechende Stellung zurückverstellbar ist.

5. Steuervorrichtung (10) nach einem der vorhergehenden Ansprüche, wobei mittels der Elektronikeinrichtung (12) ein mechanischer Pedalsimulator, eine hydraulische Pedal-Simulatoreinrichtung, eine Pedal-Einrichtung und/oder ein Ventil des rekuperativen Bremssystems als die Bremssystemkomponente (18) ansteuerbar sind.

6. Bremspedal mit einer Steuervorrichtung (10) nach einem der vorhergehenden Ansprüche.

7. Steuervorrichtung (30) für eine Informationsausgabeeinrichtung (32) eines Fahrzeugs mit:
einer Auswerteeinrichtung (34), welche dazu ausgelegt ist, eine erste Information (14) bezüglich eines aktuell maximal ausübbaren Motor-Bremsmoments (Bm) mindestens eines generatorisch betreibbaren Elektromotors eines rekuperativen Bremssystems des Fahrzeugs zu empfangen oder zu ermitteln, eine zweite Information (16) bezüglich eines von einem Fahrer des Fahrzeugs durch eine Betätigung eines Bremspedals angeforderten Soll-Bremsmoments (Bsoll) zu empfangen oder zu ermitteln, und unter Berücksichtigung der ersten Information (14) und der zweiten Information (16) die Informationsausgabeeinrichtung (32) bei einem Überschreiten des aktuell maximal ausübbaren Motor-Bremsmoments (Bm) durch das Soll-Bremsmoment (Bsoll) so anzusteuern, dass mittels der angesteuerten
Informationsausgabeeinrichtung (32) ein optisches Signal und/oder ein akustisches Signal an den Fahrer des Fahrzeugs ausgebbar ist.

8. Steuergerät für ein rekuperatives Bremssystem eines Fahrzeugs mit einer Steuervorrichtung (10, 30) nach einem der vorhergehenden Ansprüche.

9. Rekuperatives Bremssystem eines Fahrzeugs mit einer Steuervorrichtung (10, 30) nach einem der Ansprüche 1 bis 7 oder mit einem Steuergerät nach Anspruch 8.

10. Verfahren zum Betreiben mindestens eines rekuperativen Bremssystems eines Fahrzeugs mit den Schritten:
Ermitteln einer ersten Information (14) bezüglich eines aktuell maximal ausübbaren Motor-Bremsmoments (Bm) mindestens eines generatorisch betreibbaren Elektromotors des rekuperativen Bremssystems (S1);
Ermitteln einer zweiten Information (16) bezüglich eines von einem Fahrer des Fahrzeugs durch eine Betätigung eines Bremspedals angeforderten Soll-Bremsmoments (Bsoll) (S2);
**gekennzeichnet durch** den Schritt:
Ansteuern einer Informationsausgabeeinrichtung (32) des Fahrzeugs unter Berücksichtigung der ersten Information (14) und der zweiten Information (16) so, dass bei einem Überschreiten des aktuell maximal ausübbaren Motor-Bremsmoments (Bm) **durch** das Soll-Bremsmoment (Bsoll) mittels der angesteuerten Informationsausgabeeinrichtung (32) ein optisches Signal und/oder ein akustisches Signal an den Fahrer ausgegeben wird (S3); und/oder
Ansteuern einer Bremssystemkomponente (18) des rekuperativen Bremssystems zum Ausüben einer der Betätigung des Bremspedals entgegenwirkenden Gegenkraft (Fg) unter Berücksichtigung der ersten Information (14) und der zweiten Information (16) so, dass eine haptische Rückmeldung an den das Bremspedal betätigenden Fahrer aufgrund einer Kraftstufe (Δ) der von der angesteuerten Bremssystemkomponente (18) ausgeübten Gegenkraft (Fg) bei dem Überschreiten des aktuell maximal ausübbaren Motor-Bremsmoments (Bm) **durch** das Soll-Bremsmoment (Bsoll) ausgegeben wird (S4).

11. Verfahren nach Anspruch 10, wobei, sofern das aktuell maximal ausübbare Motor-Bremsmoment (Bm) nach dem Überschreiten des aktuell maximal ausübbaren Motor-Bremsmoments (Bsoll) durch das Soll-Bremsmoment (Bm) abnimmt, die Bremssystemkomponente (18) und/oder ein dem Bremspedal zugeordneter Motor so angesteuert werden, dass das Bremspedal mittels der Bremssystemkomponente (18) und/oder des Motors in eine dem aktuell maximal ausübbaren Motor-Bremsmoment (Bm) entsprechende Stellung zurückverstellt wird.
